# EUROPÄISCHE PATENTANMELDUNG

(11) **EP 4 517 692 A1**
(43) Veröffentlichungstag der Anmeldung: **05.03.2025**
(21) Anmeldenummer: 23194853.0
(22) Anmeldetag: 01.09.2023
(51) Int. Cl.: G06V 20/10, G06T 7/00, G06T 7/20, G06V 20/56, G06V 20/68

(54) **VERFAHREN UND MOBILE VORRICHTUNG ZUM ZÄHLEN VON FRÜCHTEN**

(71) Anmelder: Siemens Aktiengesellschaft, 80333 München (DE)
(72) Erfinder: Geipel, Markus Michael, 81739 München (DE); Palacios Valdes, Carlos Andres, 81739 München (DE); Reitinger, Axel, 81377 München (DE); Yang, Yinchong, 85579 Neubiberg (DE)

(57) **Zusammenfassung**

Die Erfindung betrifft ein Verfahren zum Zählen von Früchten (F) von pflanzlichen Erzeugnissen, wobei eine Kamera (1) parallel zu einer Planzreihe (PR1,PR2) bewegt wird und eine optische Achse (a) der Kamera (1) orthogonal zu der sich längs erstreckenden Planzreihe (PR1,PR2) ausgerichtet ist, wobei eine Bildfolge (nf) mit einer Vielzahl von Bildern (n) über die Bewegung verteilt aufgenommen wird, wobei die Kamera (1) mit einer bestimmten Geschwindigkeit (v) bewegt wird, pro Bild (n) wird ein Detektions-Algorithmus (DA) angewendet und es werden die Positionsdaten (PD) von erkannten Früchten (F) der pflanzlichen Erzeugnisse dem Bild (n) zugeordnet, für zwei aufeinanderfolgende Bilder (n,n+1) wird auf das Nachfolgerbild (n+1) ein Verfolgungs-Algorithmus (VA) auf die im Vorgängerbild (n) erkannte Frucht (F) bzw. dessen Positionsdaten (PD) angewendet, aufgrund der bekannten Geschwindigkeit (v) werden Positionsdaten (PD) prognostiziert und es wird für ein Nachfolgerbild (n+1) mit Prognose-Positionsdaten (PRD) eine Erwartungshaltung generiert, welche mit den im Nachfolgerbild (n+1) erkannten Positionsdaten (PD) verglichen wird, stimmen die erkannten Positionsdaten (PD) mit den Prognose-Positionsdaten (PRD) überein wird ein Verfolgungszähler (TO) hochgezählt, hat der Verfolgungszähler (TO) für eine Frucht (F) einen vorgebbaren Wert erreicht, so wird ein Frucht-Zähler (CNT) hochgezählt.

## Beschreibung

Die Erfindung betrifft ein Verfahren zum Zählen von Früchten von pflanzlichen Erzeugnissen, bei welchen eine Kamera eingesetzt wird.

Auch betrifft die Erfindung eine mobile Vorrichtung zum Zählen von Früchten von pflanzlichen Erzeugnissen umfassend eine Kamera und ein Fahrwerk.

In der EP 3 476 211 B1 wird ein System zum Durchführen einer autonomen Landwirtschaft innerhalb einer landwirtschaftlichen Produktionsumgebung offenbart.

Um das zu erwartende Erntevolumen abzuschätzen, müssen Gewächshausbetreiber die Früchte zählen. Dabei handelt es sich um einen weitgehend manuellen Prozess.

Die "Erntezählung" in Gewächshäusern erfolgt bisher manuell. Es ist eine Aufgabe der vorliegenden Erfindung, den Betreibern von Gewächshäusern die Erntezählung zu erleichterten.

Die Aufgabe wird durch ein Verfahren zum Zählen von Früchten von pflanzlichen Erzeugnissen gelöst, wobei eine Kamera parallel zu einer Pflanzreihe bewegt wird und eine optische Achse der Kamera orthogonal zu der sich längserstreckenden Planzreihe ausgerichtet ist, wobei eine Bildfolge mit einer Vielzahl von Bildern über die Bewegung verteilt aufgenommen wird, wobei die Kamera mit einer bestimmten Geschwindigkeit bewegt wird, auf jedes Bild wird ein Detektions-Algorithmus angewendet und es werden die Positionsdaten von in dem Bild erkannten Früchten der pflanzlichen Erzeugnisse dem Bild zugeordnet, für zwei aufeinanderfolgende Bilder wird auf das Nachfolgerbild ein Verfolgungs-Algorithmus auf die im Vorgängerbild erkannte Frucht bzw. auf dessen Positionsdaten angewendet, aufgrund der bekannten Geschwindigkeit werden Positionsdaten prognostiziert und es wird für das Nachfolgerbild mit Prognose-Positionsdaten eine Erwartungshaltung generiert, welche mit den im Nachfolgerbild erkannten Positionsdaten verglichen wird, stimmen die erkannten Positionsdaten mit den Prognose-Positionsdaten überein, wird ein Verfolgungszähler hochgezählt, hat der Verfolgungszähler für eine Frucht einen vorgebbaren Wert erreicht, so wird ein Frucht-Zähler hochgezählt.

Die zu erwartende Position im nächsten Bild wird aufgrund der gleichförmigen Geschwindigkeit extrapoliert und zusätzlich wird eine Begrenzungsbox im aktuellen Bild um das erkannte Objekt gesetzt. Diese Begrenzungsbox kann dann in das nächste Bild projiziert werden und die Frucht muss wieder in der Begrenzungsbox auftauchen. Mit den Begrenzungsboxen, die in zwei oder mehr Videobildern gesetzt wurden, basierend auf der geschätzten Position, kann jede einzelne Frucht verfolgt werden.

Eine weitere Genauigkeit wird erreicht, wenn anhand der bekannten Geschwindigkeit der sich bewegenden Kamera ein Abstand zwischen der Kamera und der Frucht berechnet wird, aufgrund der bekannten Geschwindigkeit können dann Abstände zwischen Kamera und Frucht prognostiziert werden und es wird für ein Nachfolgerbild mit Prognose-Abständen für bestimmte Früchte eine Erwartungshaltung generiert.

Indem der Parallaxeneffekt genutzt wird, der durch eine Kamera verursacht wird, die sich parallel zum Beobachtungsziel bewegt, kann in Kombination mit einer Objekterkennungs- und Tracking-software das Zählen sicher automatisiert werden.

Wenn sich der Beobachter bewegt, bewegen sich betrachtete Objekte im Bild je nach ihrer Distanz zum Fixationspunkt unterschiedlich schnell und in unterschiedliche Richtungen, diesen Geschwindigkeitsunterschied nennt man Bewegungsparallaxe.

Automatisierte Lösungen sind videobasiert und müssen zwei miteinander verwandte Probleme lösen:
Das Videobild erfasst nicht nur Früchte aus der Reihe, die analysiert werden sollen, sondern auch aus Pflanzenzeilen im Hintergrund. Vor allem ist es problematisch, wenn die Fruchtgrößen variieren und nicht als Indikator für einen Abstand genutzt werden können. In einigen Fällen ist auch die Größe der Frucht ein wertvoller Hinweis, der berücksichtigt werden muss. Die tatsächliche Größe kann nicht berechnet werden, wenn die Entfernung nicht bekannt ist.

Mit nun aber bekanntem Abstand zu einer Frucht und mit Kenntnis der intrinsischen Parameter der Kamera, vorzugsweise eine Brennweite und ein optisches Zentrum in der Bildebene, kann eine Größe der Frucht berechnet werden.

Diese Informationen werden einem Informationskonsumenten zur Verfügung gestellt und können für logistische Zwecke verwendet werden, z.B. wie viele Kisten Tomaten, Paprika, Auberginen und ähnliche Kulturen können geerntet werden und wie viele LKW braucht man zum Abtransport.

Mit einer verbesserten Nachverfolgung bezieht sich die Zählung der Früchte nur auf die Pflanzreihe, an der die Kamera vorbeigeführt wird, wobei eine Erkennung im Hintergrund ignoriert wird, indem der Abstand zu einer Frucht rechnerisch ermittelt und diese Information ausgenutzt wird. Diese verbesserte Nachverfolgung erlaubt alle Erkennungen im Vordergrund und das Ignorieren der Erkennungen im Hintergrund, indem die Distanzinformation berücksichtigt wird.

Die Informationen für einen Gewächshausbetreiber werden weiter ergänzt durch eine Schätzung der Erntereife auf der Grundlage eines Farbhistogramms eines Bildes bzw. der Bildfolge.

Den erkannten Früchten wird eine Identifikations-Nummer zugewiesen und einer erkannten Frucht, welche gemäß den Prognose-Positionsdaten an der vorausberechneten Stelle wieder auftaucht, wird die Klasse "Verfolgte-Frucht" zugewiesen; einer Frucht, die erstmalig erkannt wird, wird die Klasse "Neue-Frucht" zugewiesen, und eine Frucht, die nicht mehr an ihrer vorausberechneten Position auftaucht, wird die Klasse "Verschwundene-Frucht" zugewiesen.

Vorzugsweise wird für die Verfolgung ein Kalmanfilter eingesetzt, und bei einem Bild-für-Bild-Abgleich von Umschließungsrechtecken wird eine Bibliothek zur schnellen Suche nach ungefähren nächsten Nachbarn verwendet, wobei die Bibliothek eine Sammlung von Algorithmen enthält.

Auch wird die eingangs genannte Aufgabe durch eine mobile Vorrichtung zum Zählen von Früchten von pflanzlichen Erzeugnissen gelöst, die Vorrichtung umfassend:
eine Kamera und ein Fahrwerk letzteres dazu ausgestaltet, die Kamera parallel zu einer Planzreihe zu bewegen,
einen Antrieb mit einer Antriebssteuerung, welche ausgestaltet ist, eine vorgebbare Geschwindigkeit einzuhalten,
eine Detektions und Zähleinheit ausgestaltet mit einer ersten Schnittstelle für Bilddaten von der Kamera und einer zweiten Schnittstelle für Ausgabedaten, die Kamera ist derart angeordnet, dass eine optische Achse der Kamera orthogonal zu der sich längserstreckenden Pflanzreihe ausgerichtet ist, weiterhin ist die Kamera ausgestaltet, eine Bildfolge mit einer Vielzahl von Bildern über die Bewegung verteilt aufzunehmen und an die erste Schnittstelle weiterzugeben,
die Detektions und Zähleinheit umfasst ein Fruchterkennungs-Modul, dazu ausgestaltet in einem Bild Früchte zu erkennen, wobei ein Detektions-Algorithmus vorhanden ist, welcher die Positionsdaten der erkannten Früchte ermittelt, ein Verfolgungs-Modul, dazu ausgestaltet, für zwei aufeinanderfolgende Bilder auf das jeweilige Nachfolgerbild einen Verfolgungs-Algorithmus auf die im Vorgängerbild erkannte Frucht bzw. dessen Positionsdaten anzuwenden, weiterhin ausgestaltet, aufgrund der bekannten Geschwindigkeit Positionsdaten zu prognostizieren und für das Nachfolgerbild zu prüfen, ob die Prognose-Positionsdaten mit den im Nachfolgerbild erkannten Positionsdaten übereinstimmen, und
ein Nachweis-Modul, dazu ausgestaltet, über mehrere Bilder hinweg bei einer Übereinstimmumg der erkannten Positionsdaten mit den Prognose-Positionsdaten einen Verfolgungszähler hochzuzählen, wobei in dem Falle, in dem der Verfolgungszähler für eine Frucht einen vorgebbaren Wert erreicht hat, ein Frucht-Zähler hochgezählt wird.

Die Detektions und Zähleinheit weist weiterhin ein Abstands-Modul auf, welches ausgestaltet ist, anhand der bekannten Geschwindigkeit der sich bewegenden Kamera einen Abstand zwischen der Kamera der und Frucht zu berechnen.

Aufgrund der bekannten Geschwindigkeit können dann Abstände zwischen Kamera und Frucht prognostiziert werden und es wird für ein Nachfolgerbild mit Prognose-Abständen eine Erwartungshaltung generiert. Wenn sich der Beobachter bewegt, bewegen sich betrachtete Objekte je nach ihrer Distanz zum Fixationspunkt in der Bildfolge unterschiedlich schnell - diesen Geschwindig-keitsunterschied nennt man Bewegungsparallaxe.

Die Detektions- und Zähleinheit weist ein Wachstums-Modul auf, welches ausgestaltet ist, mittels des Abstands zu der Frucht und mit intrinsischen Parametern der Kamera, vorzugsweise einer Brennweite und einem optischen Zentrum in der Bildebene, eine Größe der Frucht zu berechnen.

Zur Verbesserung einer Genauigkeit der Zählung ist das Nachweis-Modul ausgestaltet, die Zählung der Früchte nur auf diejenige Pflanzreihe, an der die Kamera vorbeigeführt wird durchzuführen, wobei die Ausgestaltung vorsieht, eine Erkennung im Hintergrund zu ignorieren, wenn der Abstand zu der Frucht ein vorgebbares Maß überschreitet. Auch ist das Fruchterkennungs-Modul ausgestaltet den erkannten Früchten eine Identifikations-Nummer zuzuweisen.

Das Nachweis-Modul ist ausgestaltet, einer Frucht, welche gemäß den Prognose-Positionsdaten an der vorausberechneten Stelle wieder auftaucht, die Klasse "Verfolgte-Frucht" zuzuweisen, einer Frucht, die erstmalig erkannt wird, die Klasse "Neue-Frucht" zuzuweisen, und einer Frucht, die nicht mehr an ihrer vorausberechneten Position auftaucht, die Klasse "Verschwundene-Frucht" zuzuweisen.

Die Zeichnung zeigt ein Ausführungsbeispiel der Erfindung.

Dabei zeigt die
- FIG 1: eine schematische Darstellung einer mobilen Vorrichtung bei einem Durchfahren einer Pflanzanordnung,
- FIG 2: eine Detektions- und Zähleinheit, welche ausgestaltet ist, das Verfahren durchzuführen,
- FIG 3: eine Bildfolge von sechs Bildern zur Verdeutlichung des Detektierens und des Zählens,
- FIG 4: eine Verdeutlichung des Prinzips des Vergleichs von zwei aufeinanderfolgenden Bildern,
- FIG 5: eine Veranschaulichung der prognostizierten PrognoseDaten für das Nachfolgerbild,
- FIG 6: eine weitere Veranschaulichung, wie das NachweisModul gemäß FIG 5 arbeitet, und
- FIG 7: den Verfahrensschritt, bei dem der Verfolgungszähler einen vorgebbaren Wert erreicht hat.

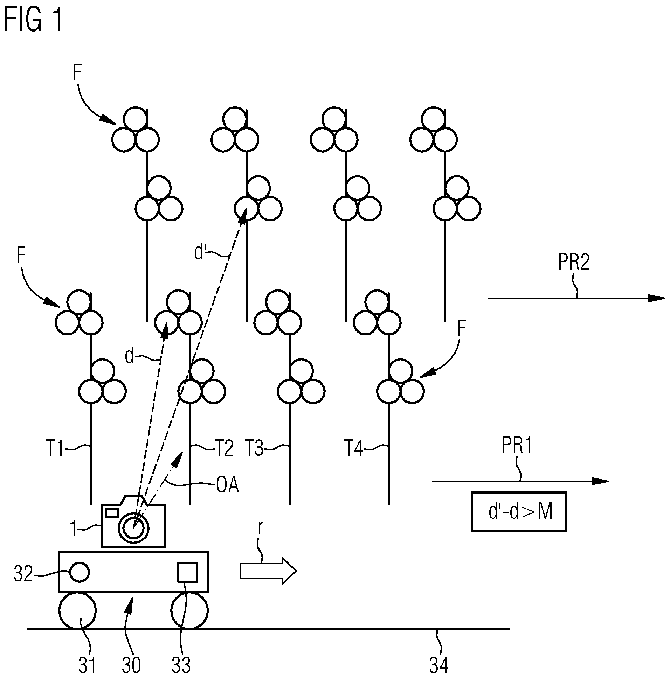

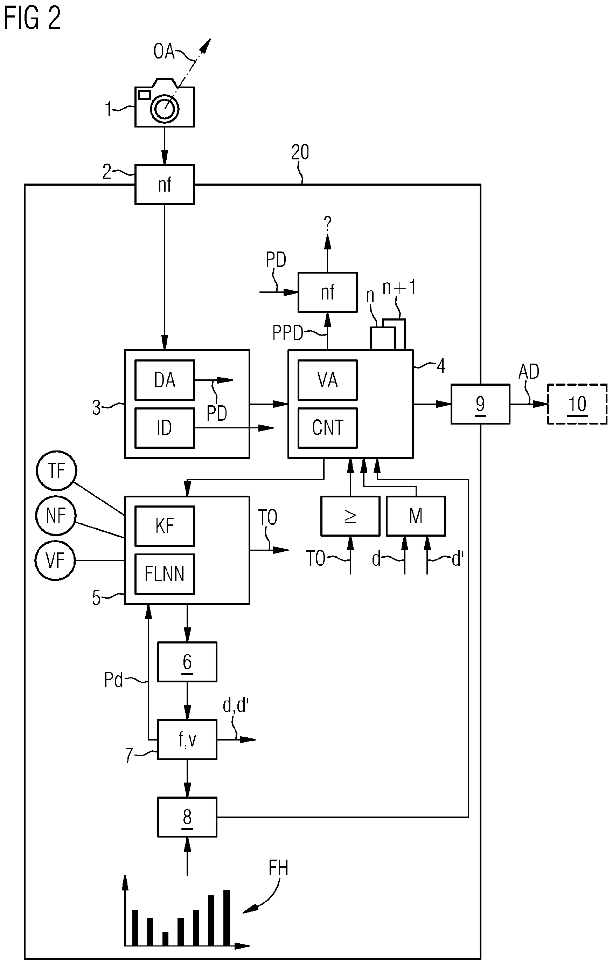

Gemäß FIG 1 ist eine mobile Vorrichtung 30 zum Zählen von Früchten F von pflanzlichen Erzeugnissen dargestellt. Die pflanzlichen Erzeugnisse mit ihren Früchten F stehen in einer ersten Pflanzreihe PR1 und in einer zweiten Pflanzreihe PR2. Die mobile Vorrichtung 30 mit einer Kamera 1 wird mittels eines Fahrwerks 31 und eines Antriebes 32 an der ersten Pflanzreihe PR1 parallel vorbeigeführt. Eine Antriebssteuerung 33 sorgt dafür, dass der Antrieb 32 die mobile Vorrichtung 30 mit einer konstanten Geschwindigkeit V an der ersten Pflanzreihe PR1 vorbeiführt. Die Kamera 1 auf der mobilen Vorrichtung 30 ist derart angeordnet, dass eine optische Achse OA der Kamera 1 orthogonal zu der sich längs erstreckenden Pflanzreihe PR1 ausgerichtet ist, weiterhin ist die Kamera 1 ausgestaltet, eine Bildfolge nf mit einer Vielzahl von Bildern n über die Bewegung verteilt aufzunehmen und an eine erste Schnittstelle 2 (siehe FIG 2) weiterzugeben. Die erste Pflanzreihe PR1 weist eine erste Tomatenpflanze T1, eine zweite Tomatenpflanze T2, eine dritte Tomatenpflanze T3 und eine vierte Tomatenpflanze T4 auf. Die genannten Tomatenpflanzen T1, ..., T4 sind jeweils mit einer Vielzahl von Früchten F versehen. Die Kamera 1 ist auf der mobilen Vorrichtung angeordnet und kann aufgrund des Antriebes 32 im Zusammenspiel mit der Antriebssteuerung 33 eine konstante Geschwindigkeit V ausführen. Die Kamera 1 weist eine optische Achse OA auf, mit der sie derart parallel an der ersten Pflanzreihe PR1 vorbeigeführt wird, sodass der Parallaxeneffekt ausgenutzt werden kann. Es können somit ein Abstand d zu Früchten F der ersten Pflanzreihe PR1 sowie ein Abstand d` zu Früchten F der zweiten Pflanzreihe PR2 ermittelt werden.

Für die nachfolgende Betrachtung ist es hilfreich, wenn man FIG 1 und FIG 2 parallel betrachtet. Die mobile Vorrichtung 30 umfasst eine Detektions- und Zähleinheit 20, siehe FIG 2, diese Detektions- und Zähleinheit 20 weist ein Fruchterkennungs-Modul 3 auf. Das Fruchterkennungs-Modul 3 ist ausgestaltet, in einem Bild n Früchte F zu erkennen, wobei ein Detektions-Algorithmus DA vorhanden ist, welcher Positionsdaten PD der erkannten Früchte F ermittelt. Weiterhin ist ein Verfolgungs-Modul 4 vorhanden, welches ausgestaltet ist, für zwei aufeinanderfolgende Bilder n, n+1 auf das Nachfolgerbild n+1 einen Verfolgungs-Algorithmus VA für die im Vorgängerbild n erkannte Frucht F bzw. deren Positionsdaten PA anzuwenden.

Die Detektions- und Zähleinheit 20 ist ausgestaltet mit einem Nachweis-Modul 5, welches über mehrere Bilder hinweg bei einer Übereinstimmung der erkannten Positionsdaten PD mit dem Prognose-Positionsdaten PPD einen Verfolgungszähler TO hochzählt. Hat der Verfolgungszähler TO für eine Frucht F mit der ihn zugewiesenen Identifikations-Nummer ID einen vorgebbaren Wert erreicht, so wird ein Frucht-Zähler CNT hochgezählt.

Um mögliche Unschärfen oder Rauschen bei der Zählung der Früchte F zu unterdrücken bzw. zu kompensieren, ist das Nachweis-Modul 5 dazu ausgestaltet, eine Frucht F, welche gemäß dem Prognose-Positionsdaten PPD an der vorausberechnenden Stelle wieder auftaucht, die Klasse Verfolgte-Frucht (Trace fruit) zuzuweisen, einer Frucht F, die erstmalig erkannt wird, die Klasse neue Frucht NF (New fruit) zuzuweisen und eine Frucht F, die nicht mehr an ihrer vorausberechnenden Position auftaucht, die Klasse Verschwundene-Frucht VF (Vanish fruit) zuzuweisen.

Die Detektions- und Zähleinheit 20 weist weiterhin ein Abstandsmodul 7 auf, welches ausgestaltet ist, anhand der bekannten Geschwindigkeit V der sich bewegenden Kamera 1 einen Abstand d zwischen der Kamera 1 und der Frucht F zu berechnen. Aufgrund der bekannten Geschwindigkeit V können Abstände zwischen der Kamera 1 und der Frucht F prognostiziert werden und es wird für ein Nachfolgerbild n+1 mit Prognose-Abständen d` eine Erwartungshaltung generiert, anhand derer entschieden werden kann, ob die Frucht F die in dem Vorgängerbild n auch diejenige ist, die in dem Nachfolgerbild n+1 erkannt wurde, denn so kann sie letztendlich richtig gezählt werden und nicht versehentlich eine Frucht F aus der zweiten Pflanzreihe PR2 mitgezahlt wird.

Die Detektions- und Zähleinheit 20 weist weiterhin ein Wachstums-Modul 8 auf, welches ausgestaltet ist, mittels des Abstandes d zu der Frucht F und mit intrinsischen Parametern der Kamera 1, vorzugsweise einer Brennweite f und einem optischen Zentrum in der Bildebene, eine Größe der Frucht F zu berechnen.

Das Nachweis-Modul 5 ist dabei ausgestaltet, die Zählung der Früchte F nur auf die erste, nächstliegende Pflanzreihe PR1, an der die Kamera 1 vorbeiführt wird, durchzuführen. Diese besondere Ausgestaltung sieht eine Ignorierung der Erkennung der Früchte im Hintergrund vor, denn wenn der Abstand d zu der Frucht F ein vorgebbares Maß M überschreitet, wird diese Frucht F nicht mehr als erkannte Frucht F der Pflanzreihe PR1 zugeordnet.

Um die erkannten Früchte F zu unterscheiden, ist das Fruchterkennungs-Modul 3 dazu ausgestaltet, jeder zuerst erkannten Frucht F eine Identifikations-Nummer ID zuzuweisen.

Das Nachweis-Modul 5 hat bei einer Auswahl der Erntereife Zugriff auf ein Farbhistogramm FH. Wenn eine Frucht F erkannt wurde und deren Farbe bestimmt wurde, kann anhand der Farbe mit Abstimmung des Farbhistogramms FH eine Erntereife bestimmt werden. Des Weiteren weist das Nachweis-Modul 5 eine Bibliothek FLANN zur schnellen Suche nach ungefähren nächsten Nachbarn auf. Diese Bibliothek FLANN weist eine Sammlung von verschiedenen Algorithmen für einen Bild-für-Bild-Vergleich auf.

Letztlich können die Daten, wie gezählte Tomaten - dies entspricht dem Frucht-Zähler CNT - oder Erntereifegrad über eine zweite Schnittstelle 9 einem Informationskonsumenten 10 bereitgestellt werden. Die zweite Schnittstelle 9 stellt dann zahlreiche Ausgabedaten AD für den Informationskonsumenten 10, beispielsweise einen Logistiker, der berechnen muss, wieviele Kisten Tomaten er mit seinen Ernte-LKW voraussichtlich transportieren muss, bereit.

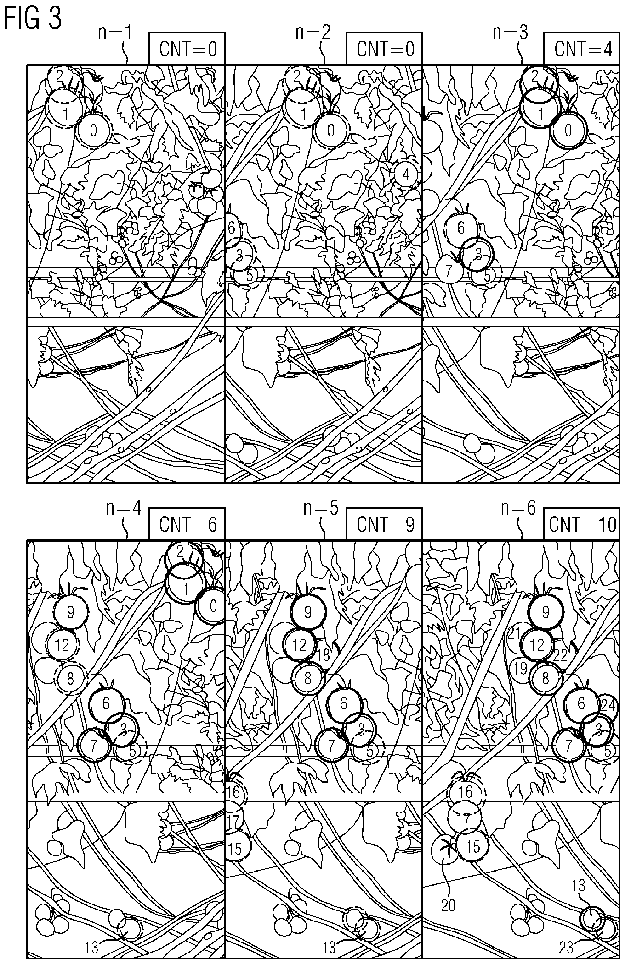

Die FIG 3 zeigt eine Abfolge von sechs unterschiedlichen Bildern, welche einem einer Bildfolge nf entsprechen. Die Kamera 1 auf der mobilen Vorrichtung 30 hat nun zahlreiche Informationen aufgenommen.

In der FIG 3 sind exemplarisch nacheinander ein erstes Bild n=1, ein zweites Bild n=2, ein drittes Bild n=3, ein viertes Bild n=4, ein fünftes Bild n=5 und ein sechstes Bild n=6 dargestellt.

Wird das erste Bild n=1 von dem Fruchterkennungs-Modul 3 untersucht, so wird jeder erkannten Frucht eine ID (Identifikationsnummer) zugeordnet. In dem Fall von FIG 3 und dem Bild n=1 wird in der oberen linken Ecke eine Frucht die ID = 0 und einer anderen Frucht die ID = 1 zugewiesen. Das Fruchterkennungs-Modul 3 hat nun mit seinem Detektions-Algorithmus DA das erste Bild n=1 bzw. dem ersten Frame untersucht. Einen Fruchtzähler CNT konnte es noch nicht inkrementieren, da bisher nur eine erste Frucht mit der ID = 0 und eine zweite Frucht mit der ID = 1 erkannt wurde.

In dem zweiten Bild n=2 wandern von der linken Bildseite weitere Früchte in das Bild n=2 hinein. Eine Frucht mit der ID = 3, eine Frucht mit der ID = 6 und eine Frucht mit der ID = 5. Im rechten Bildrand vom Bild n=2 ist eine Frucht mit der ID =4 identifiziert worden.

Das darauffolgende Bild n=3 zeigt oben rechts die bereits erkannten Früchte F mit den ID's 0,1,2. Die Frucht mit der ID = 6 wurde zweifelsfrei wiedererkannt, ebenso wurde die Frucht mit der ID = 3 auch erkannt, aber die Frucht mit der ID = 5 konnte von dem Detektions-Algorithmus DA nicht verifiziert werden. Aber es ist im Bild n=3 eine neue Frucht mit der ID = 7 aufgetaucht.

Nun untersucht der Detektions-Algorithmus DA das Bild n=4. Aufgrund des Nachweis-Modules 5 konnte bereits im Bild n=3 der Frucht-Zähler CNT auf 4 erhöht werden.

Durch das Bild n=4 kann den Frucht-Zähler CNT bereits auf sechs gesetzt werden, weil neben den ursprünglichen erkannten ID's = 0,1,2,3 auch die Früchte mit der ID = 6 und die Frucht mit der ID = 7 sicher identifiziert werden konnten. In dem Bild n=4 erscheinen im linken oberen Bildrand gleich die nächsten erkannten Früchte F, welchen die IDs 8,9,12 zugeordnet werden. In dem darauffolgenden Bild n=5 kann dem Frucht-Zähler CNT bereits die Zahl 9 zugewiesen werden, denn die vorherigen Früchte mit der ID = 9, ID = 8 und ID = 12 wurden sicher erkannt. Im unteren Bildrand links werden weitere Früchte ID = 15,16,17 als neue Früchte erkannt.

Mit dem Bild n=6 wurde der Frucht-Zähler CNT bereits auf 10 gesetzt, denn die bereits zuvor erkannten Früchte mit der ID 8,9,12 wurden jetzt in dem darauffolgenden Bild auch sicher erkannt.

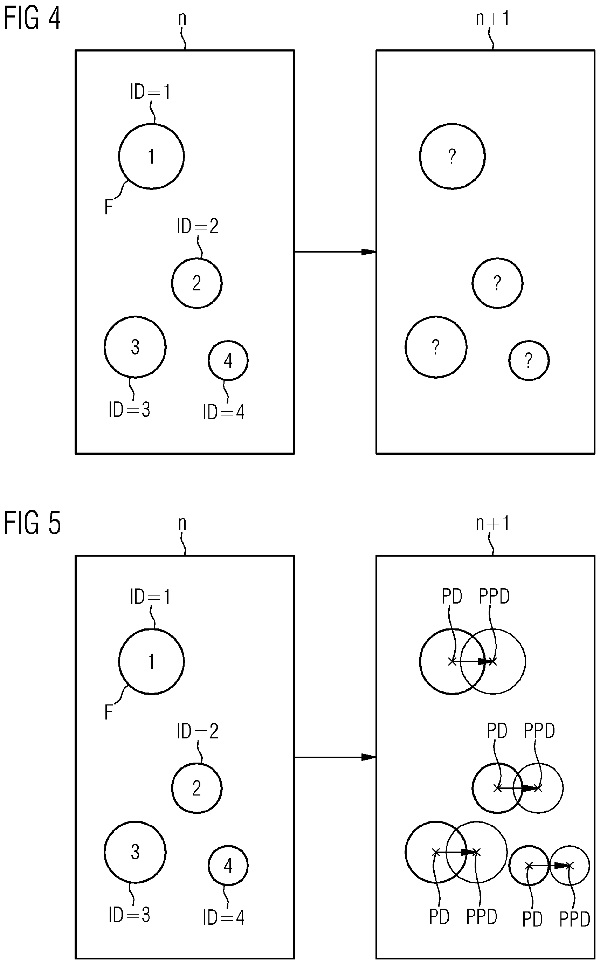

Exemplarisch zeigt die FIG 4, wie aufgrund der bekannten Geschwindigkeit V möglicherweise zukünftige Positionsdaten PD prognostiziert werden können. Denn die zu erwartenden Positionsdaten in einem Nachfolgerbild n+1 müssten sich ja von den Positionsdaten PD in dem Vorgängerbild n unterscheiden.

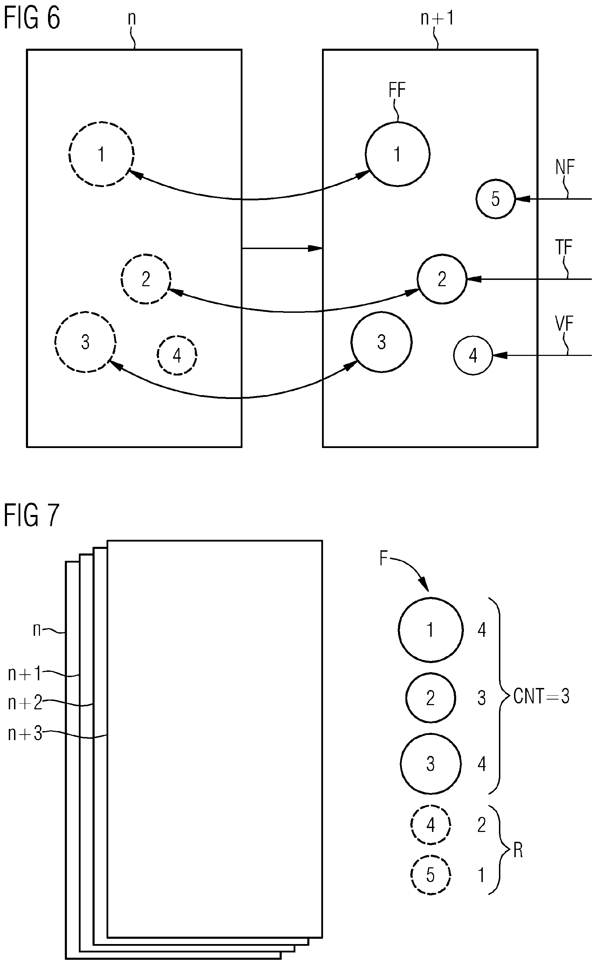

Gemäß FIG 5 werden in einem Bild n für die erkannten Früchte F mit den Positionsdaten PD und den Identifikations-Nummern ID = 1, ID = 2, ID = 3 und ID = 4 in einem Nachfolgebild n+1 die zu erwartenden Positionsdaten PD der einzelnen Früchte F mit den einzelnen IDs unterschieden, und gerade dieser Unterschied wird im Nachverfolgungs-Algorithmus ausgewertet. Dieser Nachverfolgungs-Algorithmus, der in FIG 2 Verfolgungs-Algorithmus VA genannt wird, wird noch einmal in der FIG 6 verdeutlicht. In einem Bild n sind die Früchte F mit der ID = 1, ID = 2, ID = 3 und ID = 4 erkannt worden. In dem nachfolgenden Bild n+1 sind ebenfalls die Früchte F mit der ID = 1, ID = 2 und ID = 3 sicher erkannt worden. In das Bild n+1 hat sich aber ein neues Objekt mit der ID = 5 eingeschlichen. Es wird demnach als neue Frucht F erkannt. Am Beispiel der bereits erkannten Frucht mit der ID = 2 in dem Bild n wird in dem Bild n+1 auch die Frucht mit der ID = 2 wieder erkannt und somit wird sie als ein verfolgtes Objekt mit der Klasse Verfolgte-Frucht TF erkannt. Da aber ausgehend von dem Bild n in dem Bild n+1 die Frucht F mit der ID = 4 nicht mehr erkannt wurde, wird die Frucht F bzw. die vermeintliche Frucht F mit der ID = 4 als eine Verschwundene-Frucht VF klassifiziert.

Mit diesem Algorithmus und der Klassifizierung lässt sich eine genaue Zählung durchführen.

Mit der FIG 7 wird noch einmal exemplarisch gezeigt, wie über mehrere Bilder n, n+1, n+2, n+3 mit dem erkannten Früchten bzw. den über mehrere Bilder n, n+1, n+3 erkannten Verfolgungszähler TO letztendlich auf einen Frucht-Zähler CNT geschlossen werden kann. Für die Früchte F mit der ID = 1, ID = 2 und ID = 3 konnte sicher über mehrere Bilder erkannt werden, dass diese Früchte F vorhanden sind, somit wird der Frucht-Zähler CNT auf 3 gesetzt bzw. um 3 erhöht. Die Früchte F bzw. die vermeintlich erkannten Früchte F mit der ID = 4 und mit der ID = 5 wurden jeweils nur zweimal bzw. nur einmal detektiert. Damit fallen sie unter ein Rauschen R und werden nicht mitgezählt.

## Patentansprüche

1. Verfahren zum Zählen von Früchten (F) von pflanzlichen Erzeugnissen, wobei eine Kamera (1) parallel zu einer Pflanzreihe (PR1, PR2) bewegt wird und eine optische Achse (a) der Kamera (1) orthogonal zu der sich längs erstreckenden Pflanzreihe (PR1, PR2) ausgerichtet ist, wobei eine Bildfolge (nf) mit einer Vielzahl von Bildern (n) über die Bewegung verteilt aufgenommen wird, wobei die Kamera (1) mit einer bestimmten Geschwindigkeit (v) bewegt wird,
wobei pro Bild (n) ein Detektions-Algorithmus (DA) angewendet und die Positionsdaten (PD) von erkannten Früchten (F) der pflanzlichen Erzeugnisse dem Bild (n) zugeordnet werden, wobei für zwei aufeinanderfolgende Bilder (n, n+1) auf das jeweilige Nachfolgerbild (n+1) ein Verfolgungs-Algorithmus (VA) in Bezug auf die im Vorgängerbild (n) erkannte Frucht (F) bzw. dessen Positionsdaten (PD) angewendet wird,
wobei aufgrund der bekannten Geschwindigkeit (v) Positionsdaten (PD) prognostiziert werden und für ein Nachfolgerbild (n+1) mit Prognose-Positionsdaten (PRD) eine Erwartungshaltung generiert wird, welche mit den im Nachfolgerbild (n+1) erkannten Positionsdaten (PD) verglichen wird,
wobei in dem Fall, in dem die erkannten Positionsdaten (PD) mit den Prognose-Positionsdaten (PPD) übereinstimmen, ein Verfolgungszähler (TO) hochgezählt wird, und sofern der Verfolgungszähler (TO) für eine Frucht (F) einen vorgebbaren Wert erreicht hat, ein Frucht-Zähler (CNT) hochgezählt wird.

2. Verfahren nach Anspruch 1,
wobei anhand der bekannten Geschwindigkeit (v) der sich bewegenden Kamera (1) ein Abstand (d) zwischen der Kamera (1) und Frucht (F) berechnet wird,
wobei aufgrund der bekannten Geschwindigkeit (v) dann für ein Nachfolgerbild (n+1) Abstände zwischen Kamera (1) und Frucht (F) prognostiziert und mit den Prognose-Abständen (Pd) eine Erwartungshaltung generiert wird.

3. Verfahren nach Anspruch 2, wobei bei bekanntem Abstand (d) der Kamera zu einer Frucht (F), mit einer Abbildungsgröße der Frucht und mit Kenntnis der intrinsischen Parameter der Kamera, vorzugsweise einer Brennweite (f) und eines optisches Zentrums in der Bildebene, eine Größe der Frucht (F) berechnet wird.

4. Verfahren nach Anspruch 2 oder 3, wobei die Zählung der Früchte (F) sich nur auf die Pflanzreihe (PR1), an der die Kamera (1) vorbeigeführt wird, bezieht, wobei eine Erkennung im Hintergrund ignoriert wird, indem der Abstand (d) zu einer Frucht (F) zur Filterung verwendet wird.

5. Verfahren nach einem der Ansprüche 1 bis 4, bei welchem eine Schätzung der Erntereife auf der Grundlage eines Farbhistogramms (FH) eines Bildes bzw. der Bildfolge (nf) durchgeführt wird.

6. Verfahren nach einem der Ansprüche 1 bis 5, wobei den erkannten Früchten (F) eine Identifikations-Nummer (ID) zugewiesen wird.

7. Verfahren nach einem der Ansprüche 1 bis 6, wobei einer Frucht (F), welche gemäß den Prognose-Positionsdaten (PPD) an der vorausberechneten Stelle wieder auftaucht, die Klasse Verfolgte-Frucht (TF) zugewiesen wird,
einer Frucht (F), die erstmalig erkannt wird, die Klasse Neue-Frucht (NF) zugewiesen wird, und einer Frucht (F), die nicht mehr an ihrer vorausberechneten Position auftaucht, die Klasse Verschwundene-Frucht (VF) zugewiesen wird.

8. Verfahren nach einem der Ansprüche 1 bis 7, wobei ein Kalmanfilter eingesetzt wird.

9. Verfahren nach einem der Ansprüche 1 bis 8, wobei bei einem Bild-für-Bild-Abgleich von Umschließungsrechtecken eine Bibliothek (FLANN) zur schnellen Suche nach ungefähren nächsten Nachbarn verwendet wird, wobei die Bibliothek eine Sammlung von Algorithmen enthält.

10. Mobile Vorrichtung (30) zum Zählen von Früchten (F) von pflanzlichen Erzeugnissen,
umfassend
- eine Kamera (1),
- ein Fahrwerk (31) ausgestaltet die Kamera parallel zu einer Pflanzreihe (PR1,PR2) zu bewegen,
- einen Antrieb (32) mit einer Antriebssteuerung (33), welche ausgestaltet ist eine vorgebbare Geschwindigkeit (v) einzuhalten,
- eine Detektions- und Zähleinheit (20) ausgestaltet mit einer ersten Schnittstelle (2) für Bilddaten (bd) von der Kamera (1) und einer zweiten Schnittstelle (9) für Ausgabedaten (AD),
wobei die Kamera (1) derart angeordnet ist, dass eine optische Achse (OA) der Kamera (1) orthogonal zu der sich längserstreckenden Pflanzreihe (PR1,PR2) ausgerichtet ist, weiterhin ist die Kamera (1) ausgestaltet ist, eine Bildfolge (nf) mit einer Vielzahl von Bildern (n) über die Bewegung verteilt aufzunehmen und an die erste Schnittstelle (2) weiterzugeben,
wobei die Detektions- und Zähleinheit (20) umfasst:
- ein Fruchterkennungs-Modul (3), dazu ausgestaltet, in einem Bild (n) Früchte (F) zu erkennen, wobei ein Detektions-Algorithmus (DA) vorhanden ist, welcher die Positionsdaten (PD) der erkannten Früchte (F) ermittelt,
- ein Verfolgungs-Modul (4), dazu ausgestaltet, für zwei aufeinanderfolgende Bilder (n,n+1) auf das jeweilige Nachfolgerbild (n+1) einen Verfolgungs-Algorithmus (VA) auf die im Vorgängerbild (n) erkannte Frucht (F) bzw. dessen Positionsdaten (PD) anzuwenden, weiterhin dazu ausgestaltet, aufgrund der bekannten Geschwindigkeit (v) Positionsdaten (PD) zu prognostizieren und für das Nachfolgerbild (n+1) zu prüfen, ob die Prognose-Positionsdaten (PPD) mit den im Nachfolgerbild (n+1) erkannten Positionsdaten (PD) der jeweiligen Frucht übereinstimmen,
- ein Nachweis-Modul (5), dazu ausgestaltet, über mehrere Bilder (n) hinweg bei einer Übereinstimmumg der erkannten Positionsdaten (PD) mit den Prognose-Positionsdaten (PPD) einen Verfolgungszähler (TO) hochzuzählen,
- wobei in dem Fall, in dem der Verfolgungszähler (TO) für eine Frucht (F) einen vorgebbaren Wert erreicht hat, wird ein Frucht-Zähler (CNT) hochgezählt.

11. Mobile Vorrichtung (30) nach Anspruch 10, wobei die Detektions und Zähleinheit (20) weiterhin ein Abstands-Modul (7) umfasst, welches ausgestaltet ist, anhand der bekannten Geschwindigkeit (v) der sich bewegenden Kamera (1) ein Abstand (d) zwischen der Kamera (1) und Frucht (F) zu berechnen.

12. Mobile Vorrichtung (30) nach Anspruch 11, wobei die Detektions- und Zähleinheit (20) weiterhin ein Wachstums-Modul (8) umfasst, welches ausgestaltet ist, mittels des Abstands (d) zu der Frucht (F) und mit intrinsischen Parameter der Kamera (1), vorzugsweise eine Brennweite (f) und ein optisches Zentrum in der Bildebene, eine Größe der Frucht (F) zu berechnen.

13. Mobile Vorrichtung (30) nach Anspruch 11, wobei das Nachweis-Modul (5) ausgestaltet ist, die Zählung der Früchte (F) nur auf die nächstliegende Pflanzreihe (PR1), an der die Kamera (1) vorbeigeführt wird durchzuführen, wobei die Ausgestaltung vorsieht, erkannte Früchte im Hintergrund zu ignorieren, wenn der Abstand (d) zu der jeweiligen Frucht (F) ein vorgebbares Maß (M) überschreitet.

14. Mobile Vorrichtung (30) nach einem der Ansprüche 10 bis 13, wobei das Fruchterkennungs-Modul (3) ausgestaltet ist, den erkannten Früchten (F) eine Identifikations-Nummer (ID) zu zuweisen.

15. Mobile Vorrichtung (30) nach einem der Ansprüche 10 bis 14, wobei das Nachweis-Modul (5) ausgestaltet ist, einer Frucht (F), welche gemäß den Prognose-Positionsdaten (PPD) an der vorausberechneten Stelle wieder auftaucht, die Klasse Verfolgte-Frucht (TF) zuzuweisen,
einer Frucht (F), die erstmalig erkannt wird, die Klasse Neue-Frucht (NF) zuzuweisen, und eine Frucht (F), die nicht mehr an ihrer vorausberechneten Position auftaucht, die Klasse Verschwundene-Frucht (VF) zuzuweisen.
